# EUROPEAN PATENT SPECIFICATION

(11) **EP 2 027 194 B1**
(45) Date of publication and mention of the grant of the patent: **06.07.2011**
(21) Application number: 07795361.0
(22) Date of filing: 24.05.2007
(51) Int. Cl.: C08J 5/22, H01M 8/10, C08J 3/09, C08L 27/12

(54) **FLUOROPOLYMER DISPERSIONS**
FLUORPOLYMERDISPERSONEN
DISPERSIONS DE FLUOROPOLYMÈRES

(30) Priority: 01.06.2006 US 810196 P
(43) Date of publication of application: 25.02.2009
(73) Proprietor: E.I. DU PONT DE NEMOURS AND COMPANY, Wilmington, DE 19898 (US)
(72) Inventor: LOUSENBERG, Robert, D., Wilmington, Delaware 19810 (US)
(74) Representative: Hirsch, Marc-Roger
(86) International application number: PCT/US2007/012506
(87) International publication number: WO 2007/142885

(56) References cited:
- EP-A- 0 079 218
- EP-A- 1 239 000
- EP-A1- 0 030 104
- EP-B1- 0 973 809
- WO-A-01/27167
- WO-A-98/16581
- US-A- 4 030 988
- US-A- 4 126 589
- US-A- 4 453 991
- US-B1- 6 733 914

## Description

### FIELD OF INVENTION

The invention is directed to fluoropolymer organic-liquid dispersions and membranes containing a homogeneous mixture of reacted and unreacted sulfonyl halide groups. The dispersions are useful in the preparation of crosslinked membranes.

### BACKGROUND

Electrochemical cells generally include an anode electrode and a cathode electrode separated by an electrolyte, where a proton exchange membrane (hereafter "PEM") is used as a polymer electrolyte. A metal catalyst and electrolyte mixture is generally used to form the anode and cathode electrodes. A well-known use of electrochemical cells is for fuel cells (a cell that converts fuel and oxidants to electrical energy). Fuel cells are typically formed as stacks or assemblages of membrane electrode assemblies (MEAs), which each include a PEM, an anode electrode and cathode electrode, and other optional components. In such a cell, a reactant or reducing fluid such as hydrogen or methanol is supplied to the anode, and an oxidant such as oxygen or air is supplied to the cathode. The reducing fluid electrochemically reacts at a surface of the anode to produce hydrogen ions and electrons. The electrons are conducted to an external load circuit and then returned to the cathode, while hydrogen ions transfer through the electrolyte to the cathode, where they react with the oxidant and electrons to produce water and release thermal energy.

Long term stability of the PEM is critically important for fuels cells. For example, the lifetime goal for stationary fuel cell applications is 40,000 hours of operation while automotive applications require a lifetime of at least 10,000 hours. However, typical membranes found in use throughout the art will degrade over time compromising MEA viability and performance. For example, stresses induced as a consequence of dimensional changes with hydration or dehydration during fuel cell cycling can cause creep and ultimately membrane failure. One solution to this problem is to provide cross-links within the body of the membrane. However, the ability to homogeneously crosslink some polymer electrolytes, such as fluoropolymer electrolytes, is limited due to the difficulties of preparing crosslinkable solutions or dispersions in the limited solvents or organic liquid media that can be used with fluoropolymer electrolytes.

Solvent or dispersion casting is a common and advantageous fuel cell membrane fabrication process. Well-known fluoropolymer electrolyte dispersions that are in widespread commercial use are Nafion^{®} perfluoroionomers available from E. I. du Pont de Nemours and Company, Wilmington DE. The solutions and dispersions used to form the membranes are also frequently used to make catalyst ink formulations that are used to form the electrodes of the fuel cell MEA. Fluoropolymer electrolyte dispersions suitable for casting membranes are disclosed in U.S. Patent Nos. 4,433,082 and 4,731,263, which teach aqueous organic and organic-liquid fluoropolymer electrolyte dispersion compositions in sulfonic acid (SO₃H) and sulfonate (SO₃⁻) form with no significant sulfonyl fluoride (SO₂F) concentrations.

U.S. Patent 3,282,875 discloses that the SO₂F group of a precursor fluoropolymer electrolyte might be used to crosslink or "vulcanize" the fluoropolymer by reaction with di- or multifunctional crosslinking agents but did not disclose a method to do this homogeneously. U.S. Patent No. 6,733,914 discloses a method for heterogeneously converting a significant fraction of the SO₂F groups of Nafion^{®}-like polymers membranes to SO₃⁻and sulfonamide (SO₂NH₂) groups by reaction with aqueous ammonia. The membranes were subsequently crosslinked by a heat-annealing step at high temperature in which some of the SO₂NH₂ groups presumably reacted with residual the SO₂F groups to form sulfonimide (-SO₂NHSO₂⁻) crosslinks. The heterogeneous nature of the front reaction with aqueous ammonia did not provide a homogeneous crosslink density throughout the film.

The SO₂F precursor form of highly fluorinated or Nafion^{®}-like fluoropolymer electrolyte materials are not readily soluble or dispersible in common organic liquids but may be soluble in fluorinated solvents under certain conditions. However, the cost and environmental concerns associated with fluorinated solvents would likely preclude their use as a large-scale solvent for dispersion casting medium. Furthermore, many conceivable crosslinking agents that might react with the SO₂F groups are insignificantly soluble in fluorinated solvents but may be soluble in common organic liquids. Thus, it is desirable to develop a simple and facile process for preparing fluoropolymer electrolyte dispersions containing significant but less than 100% remaining SO₂F group concentrations with common non-fluorinated liquids or solvents. The dispersions can be easily cast into membranes and homogeneously crosslinked for use in fuel cells and similar technologies.

### SUMMARY

The invention is directed to a dispersion comprising one or more polar liquids and a polymer with a fluorinated backbone comprising 25% to 75% pendant groups described by the formula -(O-CF₂CFR*_{f}*)ₐ-(O-CF₂)_{b}-(CFR'*_{f}*)_{c}SO₂Q, and 75% to 25% pendant groups, described by the formula -(O-CF₂CFR*_{f}*)ₐ-(O-CF₂)_{b}-(CFR'*_{f}*)_{c}So₃M, where Q is a halogen or NR¹R², or mixture thereof, R¹ and R² are independently hydrogen or optionally substituted alkyl groups, R*_{f}* and R'*_{f}* are independently selected from F, Cl or a perfluorinated alkyl group having 1 to 10 carbon atoms, a=0 to 2, b=0 to 1, c=0 to 6, and M is hydrogen or one or more univalent cations, wherein "polar liquid" means any compound that is liquid at process conditions and refers to a single liquid or to a mixture of two or more polar liquids, wherein the liquid(s) have a dipole moment of about 1.5 debye units or higher.

The invention is also directed to a method to prepare a membrane made from the dispersion.

### DETAILED DESCRIPTION

Where a range of numerical values is recited herein, unless otherwise stated, the range is intended to include the endpoints thereof, and all integers and fractions within the range. It is not intended that the scope of the invention be limited to the specific values recited when defining a range. Moreover, all ranges set forth herein are intended to include not only the particular ranges specifically described, but also any combination of values therein, including the minimum and maximum values recited.

Fuel cells are electrochemical devices that convert the chemical energy of a fuel, such as a hydrogen gas, and an oxidant, such as air, into electrical energy. Fuel cells are typically formed as stacks or assemblages of membrane electrode assemblies (MEAs), which each include an electrolyte, an anode (a negatively charged electrode) and cathode (a positively charged electrode), and other optional components. A polymeric proton exchange membrane (PEM) is frequently used as the electrolyte. Fuel cells typically also comprise a porous electrically conductive sheet material that is in electrical contact with each of the electrodes and permits diffusion of the reactants to the electrodes, and is know as a gas diffusion layer, gas diffusion substrate or gas diffusion backing. When the electrocatalyst is coated on the PEM, the MEA is said to include an catalyst coated membrane (CCM). In other instances, where the electrocatalyst is coated on the gas diffusion layer, the MEA is said to include gas diffusion electrode(s) (GDE). The functional components of fuel cells are normally aligned in layers as follows: conductive plate/ gas diffusion backing/ anode electrode/ membrane/ cathode electrode/ gas diffusion backing/ conductive plate.

Membranes made from the dispersions and by the processes described herein, particularly when converted to ionomeric acid form, can be used in conjunction with fuel cells utilizing a PEM. Examples include hydrogen fuel cells, reformed-hydrogen fuel cells, direct methanol fuel cells or other organic/air (e.g. those utilizing organic fuels of ethanol, propanol, dimethyl- or diethyl ethers, formic acid, carboxylic acid systems such as acetic acid, and the like). The membranes are also advantageously employed in MEA's for electrochemical cells. Other uses for the membranes and processes described herein include use in batteries and other types of electrochemical cells and use in cells for the electrolysis of water to form hydrogen and oxygen.

The PEM is typically comprised of an ion exchange polymer, also known as an ionomer. Following the practice of the art, the term "ionomer" is used to refer to a polymeric material having a pendant group with a terminal ionic group. The terminal ionic group may be an acid or a salt thereof as might be encountered in an intermediate stage of fabrication or production of a fuel cell. Proper operation of an electrochemical cell may require that the ionomer be in acid form. Highly fluorinated ionomers are frequently used in PEMs. The present invention is directed to methods useful for producing certain such highly fluorinated polymers.

One aspect of the invention is directed to a method to produce a polymer dispersion containing significant and homogeneously dispersed sulfonyl halide (SO₂X) groups in a non-fluorinated liquid. The method comprises the steps of:
a) providing a solution comprising a polymer solvent and a polymer containing pendant SO₂X groups, wherein the polymer comprises a fluorinated backbone containing pendant groups described by the formula -(O-CF₂CFR*_{f}*)ₐ-(O-CF₂)_{b}-(CFR'*_{f}*)_{c}SO₂X, where X is a halogen, R*_{f}* and R'*_{f}* are independently selected from F, Cl or a perfluorinated alkyl group having 1 to 10 carbon atoms, a=0 to 2, b=0 to 1, and c=0 to 6;
b) combining the solution of step a) with a nucleophilic compound Y and a polar liquid, in any order, to form a reaction mixture; and
c) removing by distillation substantially all of the polymer solvent from the reaction mixture of step b) to form a dispersion wherein 25% to 75% of the pendant SO₂X groups have reacted with the nucleophilic compound Y and 75% to 25% of the pendant SO₂X groups remain unreacted.

The polymer may be a homopolymer or a copolymer of any configuration, such as a block or random copolymer. By "fluorinated backbone" it is meant that at least 80% of the total number of halogen and hydrogen atoms on the backbone of the polymer are fluorine atoms. The polymer may also be perfluorinated, which means that 100% of the total number of halogen and hydrogen atoms on the backbone are fluorine atoms. One type of suitable polymer is a copolymer of a first fluorinated vinyl monomer and a second fluorinated vinyl monomer having one or more SO₂X groups. Possible first monomers include tetrafluoroethylene (TFE), hexafluoropropylene, vinylidine fluoride, trifluoroethylene, chlorotrifluoroethylene, perfluoroalkylvinyl ether, and mixtures thereof. Possible second monomers include a variety of fluorinated vinyl ethers with a SO₂X group. X can be any halogen or a combination of more than one halogen, and is typically F.

Suitable homopolymers and copolymers that are known in the art include those described in WO 2000/0024709 and U.S. Patent 6,025,092. A suitable fluoropolymer that is commercially available is Nafion^{®} fluoropolymer from E. I. du Pont de Nemours and Company, Wilmington DE. One type of Nafion^{®} fluoropolymer is a copolymer of tetrafluoroethylene (TFE) with perfluoro(3,6-dioxa-4-methyl-7-octenesulfonyl fluoride) (PSEPVE), as disclosed in U.S. Patent 3,282,875. Other suitable fluoropolymers are copolymers of TFE with perfluoro(3-oxa-4-pentenesulfonyl fluoride) (PSEVE), as disclosed in U.S. Patent 4,358,545 and U.S. Patent No. 4,940,525, and copolymers of TFE with CF2=CFO(CF₂)₄SO₂F, as disclosed in U.S. Patent Application 2004/0121210. The polymer may comprise a perfluorocarbon backbone and pendant groups of the formula -O-CF₂CF(CF₃)-O-CF₂CF₂SO₂F. Polymers of this type are disclosed in U.S. Patent 3,282,875. All of these copolymers can be converted later to the ionomeric form by hydrolysis, typically by exposure to an appropriate aqueous base, as disclosed in U.S. Patent 3,282,875.

The polymer is typically first dissolved in a solvent for the polymer at a concentration typically between 1 and 30% (weight % or w/w) and preferably between 10 and 20% (w/w). By "polymer solvent" is meant a solvent that will dissolve and solvate the SO₂X form of the polymer and not otherwise react with or degrade the polymer. Typically the polymer solvent is fluorinated. By "fluorinated" it is meant that at least 10% of the total number of hydrogen and halogen atoms in the solvent are fluorine. Examples of suitable polymer solvents include, but are not limited to, fluorocarbons (a compound containing only carbon and fluorine atoms), fluorocarbon ethers (a fluorocarbon additionally containing an ether linkage), hydrofluorocarbons (a compound containing only carbon, hydrogen and fluorine atoms), hydrofluorocarbon ethers (a hydrofluorocarbon additionally containing an ether linkage), chlorofluorocarbons (a compound containing only carbon, chlorine and fluorine atoms), chlorofluorocarbon ethers (a chlorofluorocarbon additionally containing an ether linkage), 2H-perfluoro(5-methyl-3,6-dioxanonane), and Fluorinert® electronic liquids (3M, St. Paul, MN). Suitable solvents also include fluorochemical solvents from E. I. DuPont de Nemours (Wilmington, DE.) A mixture of one or more different polymer solvents may also be used.

The SO₂X form polymer is dissolved with stirring and may require heating for efficient dissolution. The dissolution temperature may be dependent on the polymer composition or SO₂X concentration as measured by the equivalent weight (EW). For the purposes of this application, EW is defined to be the weight of the polymer in sulfonic acid form required to neutralize one equivalent of NaOH, in units of grams per mole (g mol⁻¹). High EW polymers (i.e. low SO₂X concentration) may require higher dissolution temperatures. When the maximum dissolution temperature at atmospheric pressure is limited by the boiling point of the solvent, a suitable pressure vessel may be used to increase the dissolution temperature. The polymer EW may be varied as desired for the particular application. Herein, polymers with EW less than or equal to 1500 g mol⁻¹ are typically employed, more typically less than about 900 g mol⁻¹.

Next, a reactive mixture is formed by mixing a nucleophilic compound, Y, and a polar liquid, with the polymer solution. The terms "nucleophilic" and "nucleophile" are recognized in the art as pertaining to a chemical moiety having a reactive pair of electrons. More specifically herein, the nucleophilic compound Y is capable of displacing the halogen X of the polymer SO₂X groups through a substitution type reaction, and forming a covalent bond with sulfur. Suitable nucleophilic compounds may include but are not limited to, water, alkali metal hydroxides, alcohols, amines, hydrocarbon and fluorocarbon sulfonamides. The amount of nucleophilic compound Y added is generally less than stoichiometric and will determine the % of SO₂X groups that will remain unreacted.

By "polar liquid" it is meant any compound that is liquid at process conditions and refers to a single liquid or to a mixture of two or more polar liquids, wherein the liquid(s) have a dipole moment of about 1.5 debye units or higher, typically 2-5. More specifically, suitable polar liquids should be capable of solvating the nucleophile Y, the reacted form of Y with the polymer SO₂X groups, but not necessarily solvate the bulk polymer. Suitable polar liquids include, but are not limited to dimethylformamide (DMF), dimethylacetamide (DMAC), N-methylpyrrolidone (NMP), dimethyl sulfoxide (DMSO), acetonitrile, propylene carbonate, methanol, ethanol, water, or combinations thereof. Suitable polar liquids preferably have a boiling point higher than the solvent for the polymer.

The nucleophilic compound Y and polar liquid may be added to the polymer solution in any order. Typically, the nucleophile Y and some or all of the polar liquid are added simultaneously as a mixture to the polymer solution. Additional polar liquid or a different polar liquid may be added in a separate step. Other compounds may be added simultaneously or sequentially in any order with Y and the polar liquid. For example, when Y is water, non-nucleophilic bases can be added, such as but not limited to LiH, NaH, and NR⁴R⁵R⁶, wherein R⁴, R⁵ and R⁶ are optionally substituted alkyl or aryl groups. The polar liquid and the nucleophile Y may also be the same compound. In one example, when water is functioning as both polar liquid and the nucleophile Y, a non-nucleophilic base as described above may need to be present.

The nucleophilic compound and polar liquid are preferably added to the polymer solution with fast turbulent mixing and at a temperature close to the dissolution temperature. When the dissolution temperature is low, the polymer solution temperature can be increased, typically above 50°C, prior to addition of the nucleophilic compound Y and polar liquid. A suitable pressure vessel can be used to increase the polymer solution temperature if it is limited due to the boiling points of the solvent, nucleophile Y, or polar liquid. The reaction, in which the nucleophilic compound Y displaces the halogen X of the polymer SO₂X groups, is typically complete within 5 minutes to 2 hours following the addition of the nucleophile and polar liquid.

Next, the reaction mixture is distilled to remove substantially all of the polymer solvent from the mixture. The distillation is preferably done at atmospheric pressure but may be done under vacuum. The distillation is considered complete when the still pot temperature approaches the boiling point of the polar liquid or the polar liquid begins to distill. Trace amounts of the polymer solvent may remain after distillation. The distillation may be repeated one or more times, optionally with additional polar liquid as needed to adjust viscosity. The remaining reaction mixture will be in the form of a dispersion with 25% to 75% of the pendant SO₂X groups having reacted with the nucleophilic compound Y and 75% to 25% of the pendant SO₂X groups remaining unreacted. The dispersion may also be filtered to remove insolubles. By "dispersion" it is meant a physically stable, homogenous mixture of fine particles of the polymer in the solvent, i.e. a mixture that does not separate into separate phases.

As defined herein, a dispersion results when the polar liquid is a good solvent for the reacted form of the nucleophile Y with the polymer pendent SO₂X groups but riot necessarily a solvent for the bulk polymer. The exact reacted form of the SO₂X group will depend on the nucleophile used. For example, when water in the presence of a non-nucleophilic base such as triethylamine (TEA) is used, the reacted form will be a triethylammonium sulfonate salt (SO₃-TEAH⁺). Typically the pendant group is converted to SO₃M, wherein M is a univalent cation.

In another embodiment of the invention, a compound of the formula HNR¹R² may be added to the reaction mixture of steps (b) and (c) referred to previously so that about 1 % to about 100% of the remaining pendant SO₂X groups are converted to pendant SO₂NR¹R² groups, wherein R¹ and R² are independently hydrogen or optionally substituted alkyl or aryl groups. The amount of SO₂X groups that are converted can be controlled by the amount of compound of the formula HNR¹R² added to the reaction mixture. Suitable substituents include but are not limited to ether oxygens, halogens, and amine functionalities. Typically R¹ and R² are hydrogen, alkyl, or aryl hydrocarbon groups.

Another aspect of the invention are polymer dispersions made by any of the processes discussed above. Membranes prepared from the dispersions are also disclosed. Preparation of membranes are discussed hereinafter.

In another embodiment novel polymer dispersions are disclosed that include one or more polar liquids and a polymer with a fluorinated backbone comprising 25% to 75% pendant groups, described by the formula -(O-CF₂CFR*_{f}*)ₐ-(O-CF₂)_{b}-(CFR'*_{f}*)_{c}SO₂Q, and 75% to 25% pendant groups described by the formula -(O-CF₂CFR*_{f}*)ₐ-(O-CF₂)_{b}-(CFR'*_{f}*)_{c}SO₃M, where Q is a halogen or NR¹R², or mixture thereof, R¹ and R² are independently hydrogen or optionally substituted alkyl groups, R*_{f}* and R'*_{f}* are independently selected from F, Cl or a perfluorinated alkyl group having 1 to 10 carbon atoms, a=0 to 2, b=0 to 1, c=0 to 6, and M is hydrogen or one or more univalent cation. The polar liquid can be a mixture and can comprise at least one polar liquid as defined above, and can also comprise water.

The polymer dispersions can be formed into membranes using any conventional method such as but not limited to solution or dispersion film casting techniques. The membrane thickness can be varied as desired for a particular electrochemical application. Typically, the membrane thickness is less than about 350 µm, more typically in the range of about 25 µm to about 175 µm. If desired, the membrane can be a laminate of two polymers such as two polymers having different EW. Such films can be made by laminating two membranes. Alternatively, one or both of the laminate components can be cast from solution or dispersion. When the membrane is a laminate, the chemical identities of the monomer units in the additional polymer can independently be the same as or different from the identities of the analogous monomer units of the first polymer. One of ordinary skill in the art will understand that membranes prepared from the dispersions will have utility in packaging, in non-electrochemical membrane applications, as an adhesive or other functional layer in a multilayer film or sheet structure, and other classic applications for polymer films and sheets which are outside electrochemistry. For the purposes of the present invention, the term "membrane," a term of art in common use is synonymous with the terms "film" or "sheet "which are terms of art in more general usage but refer to the same articles.

The membrane may optionally include a porous support or reinforcement for the purposes of improving mechanical properties, for decreasing cost and/or other reasons. The porous support may be made from a wide range of materials, such as but not limited to non-woven or woven fabrics, using various weaves such as the plain weave, basket weave, leno weave, or others. The porous support may be made from glass, hydrocarbon polymers such as polyolefins, (e.g., polyethylene, polypropylene), perhalogenated polymers such as polychlorotrifluoroethylene. Porous inorganic or ceramic materials may also be used. For resistance to thermal and chemical degradation, the support preferably is made from a fluoropolymer, most preferably a perfluoropolymer. For example, the perfluoropolymer of the porous support can be a microporous film of polytetrafluoroethylene (PTFE) or a copolymer of tetrafluoroethylene with CF₂=CFCₙF₂ₙ₊₁ (n=1 to 5) or (CF₂=CFO-(CF₂CF(CF₃)O)ₘCₙF₂ₙ₊₁ (m=0 to 15, n=1 to 15). Microporous PTFE films and sheeting are known which are suitable for use as a support layer. For example, U.S. Patent 3,664,915 discloses uniaxially stretched film having at least 40% voids. U.S. Patents 3,953,566, 3,962,153 and 4,187,390 disclose porous PTFE films having at least 70% voids.

The porous support or reinforcement may be incorporated by coating the polymer dispersions described above on the support so that the coating is on the outside surfaces as well as being distributed through the internal pores of the support. Alternately or in addition to impregnation, thin membranes can be laminated to one or both sides of the porous support. When the polar liquid dispersion is coated on a relatively nonpolar support such as microporous PTFE film, a surfactant may be used to facilitate wetting and intimate contact between the dispersion and support. The support may be pre-treated with the surfactant prior to contact with the dispersion or may be added to the dispersion itself. Preferred surfactants are anionic fluorosurfactants such as Zonyl ® from E. I. du Pont de Nemours and Company, Wilmington DE. A more preferred fluorosurfactant is the sulfonate salt of Zonyl ® 1033D.

The membranes from the dispersions described above can be homogeneously crosslinked by processes which form covalent bonds between the polymer pendant groups. One method comprises the addition of crosslinkable compounds to the dispersion before the membrane is formed. These are defined herein as compounds with the potential to form crosslinks with the pendant SO₂X groups. The crosslinkable compounds can be also be formed *in situ.* The latter may be done by converting some or all of the polymer SO₂X groups to a functionality with the potential for reacting with additional or remaining SO₂X groups. Desirable crosslinkable compounds are at least bi-functional, with two or more potentially reactive groups, so that one group would react with one type of pendant group present on the polymer. Other potentially reactive groups on the crosslinkable compound would react with the same or different types of polymer pendant groups. Membranes manufactured and containing the crosslinkable compounds are then subjected to conditions favorable for crosslinking.

Suitable crosslinkable compounds include any molecule capable of facilitating bonding to two or more pendent groups and include, but are not limited to, ammonia, diamines, carboxyl amides, and sulfonamides. The crosslinks between polymer pendant groups typically comprise one or more sulfonimide (-SO₂NHSO₂-) crosslinks. In one embodiment, ammonia is added to the polymer dispersion as the crosslinkable compound so that 1% to 100% of the remaining pendant SO₂X groups are converted to pendant sulfonamide (SO₂NH₂) groups. The resulting dispersion may be blended with additional dispersion containing SO₂X groups and a membrane is manufactured by casting. A high temperature annealing step additionally facilitates anhydrous conditions within the membrane, which can be critical during crosslinking. The membrane is then subjected to conditions which facilitate a crosslinking reaction between pendant SO₂X and SO₂NH₂ groups. Typically this is done by exposure to a compound capable of promoting the crosslinking reaction, which is known as a crosslinking promoter. Examples of crosslinking promoters include non-nucleophilic bases. Preferred crosslinking promoters are trialkylamine bases such as triethylamine, tripropylamine, tributylamine, and *N,N,N',N'-*tetramethylethylenediamine. Temperatures at or near the boiling point of the trialkylamine base are desirable for crosslinking.

In another crosslinking embodiment, crosslinks between polymer pendant groups that contain more than one sulfonimide moiety can be achieved by the addition of a separate crosslinkable compound to the dispersion. The compound may contain additional sulfonimide groups and/or at least two sulfonamide groups. One suitable compound is of the formula HNR⁷SO₂R⁸SO₂NHR⁹, wherein R⁷ and R⁹ are independently hydrogen or optionally substituted alkyl groups, and R⁸ is a substituted or unsubstituted alkyl, a substituted or unsubstituted aryl, a substituted sulfonimide polymer, an ionene polymer, or a substituted or unsubstituted heteroatomic function. Addition of this compound would facilitate crosslinks containing a -SO₂NR⁷SO₂R⁸SO₂NR⁹SO₂- moiety. A desirable crosslink of this type is -SO₂NHSO₂(CF₂)₄SO₂NHSO₂-.

A crosslinked polymer membrane that still contains SO₂X groups can be converted to the sulfonate (SO₃⁻) form, which is sometimes referred to as ionic or ionomeric form, by hydrolysis using methods known in the art. For example, the membrane may be hydrolyzed to convert it to the sodium sulfonate form by immersing it in 25% by weight NaOH for about 16 hours at a temperature of about 90°C followed by rinsing the film twice in deionized 90°C water using about 30 to about 60 minutes per rinse. Another possible method employs an aqueous solution of 6-20% of an alkali metal hydroxide and 5-40% polar organic solvent such as DMSO with a contact time of at least 5 minutes at 50-100°C followed by rinsing for 10 minutes. After hydrolyzing, the membrane can be converted if desired to another ionic form by contacting the membrane in a bath containing salt solution of the desired cation or, to the acid form, by contacting with an acid such as nitric acid and rinsing. For fuel cell use, the membrane is usually in the sulfonic acid form.

Membrane electrode assemblies (MEA) and fuel cells therefrom are well known in the art and can comprise any of the membranes described above. One suitable embodiment is described herein. An ionomeric polymer membrane is used to form a MEA by combining it with a catalyst layer, comprising a catalyst such as platinum, which is unsupported or supported on carbon particles, a binder such as Nafion^{®} fluoropolymer, and a gas diffusion backing. The catalyst layers may be made from well-known electrically conductive, catalytically active particles or materials and may be made by methods well known in the art. The catalyst layer may be formed as a film of a polymer that serves as a binder for the catalyst particles. The binder polymer can be a hydrophobic polymer, a hydrophilic polymer or a mixture of such polymers. The binder polymer is typically ionomeric and can be the same ionomer as in the membrane. A fuel cell is constructed from a single MEA or multiple MEAs stacked in series by further providing porous and electrically conductive anode and cathode gas diffusion backings, gaskets for sealing the edge of the MEA(s), which also provide an electrically insulating layer, graphite current collector blocks with flow fields for gas distribution, aluminum end blocks with tie rods to hold the fuel cell together, an anode inlet and outlet for fuel such as hydrogen, a cathode gas inlet and outlet for oxidant such as air.

### EXAMPLES 1-8

### POLY(PSEPVE-CO-TFE) AND POLY(PSEVE-CO-TFE) PARTIAL HYDROLYSIS AND DISPERSION FORMATION

### EXAMPLE 1

52.3-g of poly(PSEPVE-co-TFE), which is a copolymer of tetrafluoroethylene (TFE) and perfluoro(3,6-dioxa-4-methyl-7-octenesulfonyl fluoride) (PSEPVE), having an equivalent weight of 647-g mol⁻¹ (80.8-mmol SO₂F) were cut into small pieces and placed in a dry 1-L 3-neck round bottom (RB) flask. The flask was fitted with mechanical stirring, heating mantle, a reflux condenser with nitrogen pad, and thermocouple. Approximately 185-mL of 2H-perfluoro(5-methyl-3,6-dioxanonane) (Freon^{®} E2) was added and the polymer slowly dissolved over 0.5-h with stirring and heating to a gentle reflux. Heating was reduced and the solution cooled to between 50-70°C. Subsequent slow addition of 60-mL of *N,N-*dimethylformamide (DMF) by syringe (about 320-RPM stirring) resulted in a translucent mixture. A solution of 4.90-g (48.4-mmol) triethylamine (TEA), 1.74-g water (96.7-mmol), and about 20-mL of DMF was then added by syringe over 5-minutes. After 10 minutes, the mixture took on a white emulsion appearance. An additional 86-mL of DMF was added by syringe. The mixture was heated to about 80 to 90°C with continued stirring (approximately 320-RPM) and held at temperature for about 1 hour (h). The reflux condenser was then replaced with a short path distillation apparatus. The emulsion was distilled at atmospheric pressure with a slow nitrogen sparge across the top of the still pot. Distillate was collected at a still head temperature that started at approximately 62°C and climbed to approximately 79°C for the duration of the distillation. The majority of the E2 was distilled off leaving a transparent and nearly colorless solution. Residual water was measured by Karl Fisher (KF) titration at about 230 PPM. Weight percent solids was measured by hot plate drying followed by vacuum oven drying (about 60°C, 29.5°-Hg) until constant weight was achieved and found to be 28.1%. A sample of the dispersion was diluted to approximately 5% (w/w) with acetone-*d₆*. A non-referenced ¹⁹F NMR of the 5% dispersion showed a remaining SO₂F peak at about 43.8-PPM (1F, integral area = 32.9) and a backbone CF peak at -139.9-PPM (1 F, integral area = 100.0). Integral area calculations indicate that 67.1% of the SO₂F groups were hydrolyzed.

### EXAMPLE 2

50.1-g of a poly(PSEPVE-*co*-TFE) copolymer with a equivalent weight of 648-g mol⁻¹ (77.4-mmol SO₂F) were cut into small pieces and placed in a dry 500-mL 3-neck round bottom (RB) flask. The flask was fitted with mechanical stirring, heating mantle, and a reflux condenser with nitrogen pad. Approximately 175-mL of Freon^{®} E2 was added and the polymer slowly dissolved with stirring and moderate heating (50-60°C) in 1-2 hours. With 320-RPM stirring, 125-mL of DMF was slowly added by syringe. The mixture was homogeneous with up to about 80-mL of DMF. Further DMF addition afforded a white emulsion. 4.73-g (46.7-mmol) of TEA was then added by pipette followed by addition of about 1.85-g (103-mmol) of water. The emulsion was heated to a gentle reflux and held at temperature for about 1.5-h. Heating was reduced, and the emulsion cooled below reflux temperature. Mechanical stirring was replaced by magnetic stirring and the reflux condenser was replaced with a short path distillation apparatus. The mixture was distilled under vacuum (230-mmHg) at a temperature that started at about 55°C and climbed to about 79°C for the duration of the distillation. The majority of the E2 was distilled off leaving a transparent and nearly colorless solution. An additional 50-mL of E2 was added and distilled off under the previous conditions followed by an additional 25-mL of DMF to reduce viscosity. Residual water was measured by KF at about 300-PPM. Weight percent solids was measured by hot plate and subsequent vacuum oven drying (about 60°C, 29.5"-Hg) until constant weight was achieved and found to be 27.7-%. A sample of the dispersion was diluted to approximately 5% (w/w) with acetone-*d₆*. A non-referenced ¹⁹F NMR of the 5% dispersion showed a remaining SO₂F peak at about 43.8-PPM (1F, integral area = 35.7) and a backbone CF peak at-139.9-PPM (1F, integral area = 100.0). Integral area calculations indicate that 64.3-% of SO₂F groups were hydrolyzed.

### EXAMPLE 3

50.1-g of a poly(PSEPVE-*co*-TFE) copolymer with a equivalent weight of 648-g mol⁻¹ (77.3-mmol SO₂F) were cut into small pieces and placed in a dry 500-mL 3-neck round bottom (RB) flask. The flask was fitted with mechanical stirring, heating mantle, and a reflux condenser with nitrogen pad. Approximately 175-mL of Freon^{®} E2 was added and the polymer slowly dissolved with stirring and moderate heating (50-70°C) in about 1 hour. With the solution at about 50-70°C and about 300-RPM stirring, about 75-mL of DMF was slowly added by syringe. The mixture was colorless and translucent. 4.67-g (58.4-mmol) of 50-% aqueous NaOH was then added slowly over 5 to 10-min. Within a few minutes the mixture started to take on the appearance of a white emulsion. 100-mL of DMF was added and the mixture was heated to a gentle reflux and held at temperature for about 0.5-h. Heating was then stopped, and the product cooled below reflux temperature. Mechanical stirring was replaced by magnetic stirring and the reflux condenser was replaced with a short path distillation apparatus. The mixture was distilled under vacuum (about 150-mmHg) at a temperature that started at about 55°C and climbed to about 68°C for the duration of the distillation. The majority of the E2 was distilled off leaving a translucent and slightly yellow dispersion. Water was measured at 0.26-% by KF. An additional 100-mL of E2 was added and distilled off under the previous conditions. Water was again measured by KF and was at 0.093-%. A non-referenced ¹⁹F NMR of an approximately 5% polymer solution that had been diluted with acetone-*d₆* showed a remaining SO₂F peak at about 43.3-PPM (1F, integral area = 44.6) and a backbone CF peak at about -140-PPM (1F, integral area = 100). This corresponds to 55.4-% of SO₂F groups having been hydrolyzed. The dispersion was centrifuged leaving a much more transparent slightly yellow dispersion and approximately 4 to 5-mL of a white precipitate, which appeared to be NaF. Weight percent solids was measured by vacuum oven drying (about 80°C, 29.5"-Hg) until constant weight was achieved and found to be 26.4-%.

### EXAMPLE 4

50.09-g (69.8-mmol SO₂F) of poly(PSEPVE-*co*-TFE) copolymer having an equivalent weight of 718-g mol⁻¹ was cut into small pieces and placed in a 500-mL 3-neck RB flask. The flask was fitted with mechanical stirring, heating mantle, and a reflux condenser with nitrogen pad. About 175-mL of E2 was added and the polymer slowly dissolved with stirring at gentle reflux in about 3 hours. Heating was reduced and the temperature decreased to about 70-90°C. With 350-RPM stirring, a solution of 1.41-g (14.0-mmol) of TEA, 0.50-g of water, and 45-g of DMF was slowly added using a 125-mL pressure equalizing addition funnel. The solution turned translucent upon addition. An additional 104-g of DMF was added through the funnel with the mixture taking on the appearance of a white emulsion. The emulsion was stirred at about 70-90°C for an additional 1-h. Heating was stopped, and the product cooled below reflux temperature. The condenser was replaced by a nitrogen sparge and the addition funnel was replaced with a short path distillation apparatus. The white emulsion was distilled at atmospheric pressure with the nitrogen sparge and slowly turned transparent and nearly colorless as the E2 was removed. Residual water was measured by KF at about 260-PPM. Weight percent solids was measured by hot plate and subsequent vacuum oven drying (about 60°C, 29.5"-Hg) until constant weight was achieved and found to be 28.3-%. A sample of the dispersion was diluted to approximately 5% (w/w) with acetone-*d₆*. A non-referenced ¹⁹F NMR of the 5% dispersion showed a remaining SO₂F peak at about 44-PPM (1F, integral area = 11.1) and a complex peak spanning -70 to -90-PPM corresponding to the two pendant -OCF₂- and -CF₃ resonances (7F, integral area = 100). Integral area calculations indicate that 22.3-% of SO₂F groups were hydrolyzed.

### EXAMPLE 5

50.0-g (55.7-mmol SO₂F) of poly(PSEPVE-co-TFE) copolymer pellets having an equivalent weight of about 850-g mol⁻¹ were placed in a dry Parr^{®} 5100 glass reactor. The reactor was evacuated and 220-mL of Freon^{®} E2 was added by cannula. The reactor was back filled with N₂ and vented to atmospheric pressure. The reactor was heated to 125°C and the pellets dissolved over a period of several hours with 700 to 1000-RPM stirring. 22.6-mL of a 0.100 g/mL TEA solution in DMF (22.3-mmol TEA, 44.6-mmol water) was slowly added (1-mL/min) using a Waters 515^{®} HPLC pump. The maximum reactor pressure was 20-PSIG. An additional 120-mL of DMF was pumped (2-mL min⁻¹) into the reactor with the reaction mixture taking on a white emulsion appearance. The emulsion was cooled to <40°C, then transferred to a 1-L 3-neck RB flask fitted with mechanical stirring, a short path distillation apparatus, and a N₂ sparge. The emulsion was distilled at atmospheric pressure. The emulsion turned translucent, almost transparent, as the majority of the E2 was removed and the dispersion formed. An additional 90-mL of DMF was added during distillation to reduce viscosity. After cooling to ambient temperature, the nearly transparent dispersion was filtered through polypropylene filter cloth. Weight percent solids was measured by hot plate and subsequent vacuum oven drying (about 60°C, 29.5"-Hg) until constant weight was achieved and found to be 18.6-%. A sample of the dispersion was diluted to approximately 5% (w/w) with acetone-*d₆*. A non-referenced ¹⁹F NMR of the 5% dispersion showed a remaining SO₂F resonance at about 43-PPM (1F, integral area = 1.59) and a broad peak centered at about -82-PPM and corresponding to the pendant CF₃ and two -OCF₂- resonances (7F, integral area = 20.00). Integral area calculations indicated that 44.4-% of SO₂F groups were hydrolyzed. The equivalent weight (SO₂F form) was calculated to be 855-g mol⁻¹ from the ratio of the -82-PPM resonance integral area to the total integral area (excluding SO₂F).

### EXAMPLE 6

25.05-g (50.6-mmol SO₂F) of a poly(PSEVE-*co*-TFE), which is a copolymer of tetrafluoroethylene (TFE) and perfluoro(3-oxa-4-pentenesulfonyl fluoride) (PSEVE), having an EW of 495-g mol⁻¹, was cut into small pieces and placed in a 500-mL 3-neck RB flask. The flask was fitted with mechanical stirring, heating mantle, and a reflux condenser with nitrogen pad. About 88-mL of Freon^{®} E2 was added and the polymer slowly dissolved with stirring at gentle reflux in about 1 hour. Heating was reduced and the solution was cooled to between 70 and 90°C. With rapid stirring (about 320-RPM), a hydrolysis solution consisting of 0.770-g TEA (7.61-mmol), 0.274-g water (15.2-mmol), and about 28-g of DMF was slowly added over a period of about 15-min using a 125-mL pressure equalizing addition funnel. The mixture was homogeneous and translucent. An additional 110-g of DMF was slowly added and resulted in a white emulsion. Heating was increased and the emulsion was gently refluxed for about 0.5-h. Heating was then stopped, and the emulsion cooled below reflux temperature. The condenser was replaced by a nitrogen sparge and the addition funnel was replaced with a short path distillation apparatus. The emulsion was distilled at atmospheric pressure with a gentle nitrogen sparge and slowly turned transparent and nearly colorless as the E2 was removed. After cooling to ambient temperature, the dispersion was filtered through polypropylene filter cloth. Residual water was measured by KF at about 520-PPM. Weight percent solids was measured by hot plate and subsequent vacuum oven drying (about 60°C, 29.5"-Hg) until constant weight was achieved and found to be 17.2-%. A sample of the dispersion was diluted to approximately 5% (w/w) with acetone-*d₆*. A non-referenced ¹⁹F NMR of the 5% dispersion showed a remaining SO₂F resonance at about 44-PPM (1F, integral area = 3.50) and a broad pendent -OCF₂- resonance about -82-PPM (2F, integral area = 10.00). Integral area calculations indicate that 30.0-% of SO₂F groups were hydrolyzed.

### EXAMPLE 7

50.06-g (101-mmol SO₂F) of a poly(PSEVE-co-TFE) copolymer (EW = 495-g mol⁻¹) was cut into small pieces and placed in a 1-L 3-neck RB flask. The flask was fitted with mechanical stirring, heating mantle, and a reflux condenser with nitrogen pad. About 175-mL of E2 was added and the polymer slowly dissolved with stirring at gentle reflux in about 1 hour. Heating was reduced and the solution cooled to between 70 and 90°C. With rapid stirring (about 320-RPM), a hydrolysis solution consisting of 2.04-g TEA (20.2-mmol), 0.727-g water (40.4-mmol), and about 36-g of DMF was slowly added over a period of about 15-min using a 125-mL pressure equalizing addition funnel. The mixture was homogeneous and translucent. An additional 85-g of DMF was slowly added and the mixture took on the appearance of a white emulsion. The emulsion was heated to a gentle reflux and held at temperature for about 0.5-h. Heating was then stopped, and the product cooled below reflux temperature. The condenser was replaced by a nitrogen sparge and the addition funnel was replaced with a short path distillation apparatus. The white emulsion was distilled at atmospheric pressure with the nitrogen sparge and slowly turned transparent and was slightly yellow as the E2 was removed. Residual water was measured by KF at about 170-PPM. Weight percent solids was measured by hot plate and vacuum oven drying (about 60°C, 29.5"-Hg) until constant weight was achieved and found to be 27.2-%. A sample of the dispersion was diluted to approximately 5% (w/w) with acetone-*d₆*. A non-referenced ¹⁹F NMR of the 5% dispersion showed a remaining SO₂F resonance at about 44-PPM (1F, integral area = 6.17) and a broad pendent -OCF₂- resonance at about -82-PPM (2F, integral area = 17). Integral area calculations indicate that 27-% of the SO₂F groups were hydrolyzed.

### EXAMPLE 8

25.0-g (42.2-mmol SO₂F) of a poly(PSEVE-co-TFE) copolymer (EW = 593-g mol⁻¹) was cut into small pieces and placed in a 500-mL 3-neck RB flask. The flask was fitted with mechanical stirring, heating mantle, and a reflux condenser with nitrogen pad. About 175-mL of Freon^{®} E2 was added and the polymer slowly dissolved with stirring at gentle reflux in about 1 hour. Heating was reduced and the solution cooled to between 70 and 90°C. With rapid stirring (about 320-RPM), a solution of 1.30-g (12.8-mmol, 0.303-equiv) of TEA, 0.46-g of DI water, and about 19-g of DMF were slowly added using a 125-mL pressure equalizing addition funnel. The solution turned translucent upon addition. An additional 95-g of DMF was added through the funnel with the mixture taking on the appearance of a white emulsion. The mixture was stirred at temperature for an additional 0.5-h. Heating was then stopped, and the product cooled below reflux temperature. The condenser was replaced by a nitrogen sparge and the addition funnel was replaced with a short path distillation apparatus. The white emulsion was distilled at atmospheric pressure with the nitrogen sparge. The dispersion was nearly transparent as the majority of the E2 was removed. After cooling to room temperature, the dispersion was filtered through polypropylene filter cloth. The partial hydrolysis was repeated in essentially the same manner and the two products were combined. Weight percent solids was measured by hot plate and subsequent vacuum oven drying (about 60°C, 29.5"-Hg) until constant weight was achieved and found to be 18.0-%. A sample of the dispersion was diluted to approximately 5% (w/w) with acetone-*d₆*. A non-referenced ¹⁹F NMR of the 5% dispersion showed a remaining SO₂F resonance at about 44-PPM (1 F, integral area = 3.37) and a broad pendent -OCF₂- (2F, integral area = 10.0) resonance centered at about -82-PPM. Integral area calculations indicated that 32.6-% of the SO₂F groups were hydrolyzed.

### EXAMPLES 9-10

### CROSSLINKABLE AGENT FORMATION BY CONVERSION OF DISPERSION SO₂F GROUPS TO SULFONAMIDE (SO₂NH₂) GROUPS

### EXAMPLE 9

91.8-g (12.8-mmol SO₂F of the dispersion from Example 2 was placed in a dry 250-mL 3 neck RB flask fitted with mechanical stirring, a dry ice condenser with nitrogen pad, and gas addition port. The flask contents were chilled to about 5°C using an ice water bath. 1.04-g (61.1-mmol) of ammonia was added using a mass flow integrator at a rate between 120 and 130-mg/min. The mixture turned cloudy as ammonia was added. The flask contents were stirred at the ice water bath temperature for 0.5-h. The bath was removed and the flask contents warmed to ambient temperature with stirring overnight. The dry ice condenser and the ammonia addition port were removed and replaced with a nitrogen pad adapter, a short path distillation apparatus, and a heating mantle. About 6-mL of TEA was added and the RB flask was heated with stirring and gentle nitrogen sparge to effect conversion of ammonium cations to triethylammonium cations. The cloudy dispersion turned transparent and was slightly yellow starting at around 70°C. Heating was stopped when no more residual TEA was observed to be collecting in the receiver flask. Weight percent solids were measured by vacuum oven drying (about 60 to 90°C, 29.5"-Hg) until constant weight was achieved and found to be 31.1 %. The disappearance of remaining SO₂F groups and presence of SO₂NH₂ groups were confirmed by ¹⁹F NMR, and FTIR spectroscopy of a thin film cast from the dispersion. NH absorption centered at about 3200-cm⁻¹. and the disappearance of the remaining SO₂F absorption at about 1470-cm⁻¹ were confirmed.

### EXAMPLE 10

75-g of the dispersion from Example 1 (9.71-mmol SO₂F) were placed in a dry 250-mL 3 neck RB flask fitted with mechanical stirring, a dry ice condenser with nitrogen pad, and ammonia addition port. The flask contents were chilled to about 5°C using an ice water bath. 0.65-g (38.2-mmol) of ammonia was added using a mass flow integrator at a rate between 120 and 130-mg/min. The mixture turned cloudy as ammonia was added. The flask contents were stirred at the ice water bath temperature for 0.5-h. The bath was removed and the flask contents warmed to ambient temperature with stirring over 2 to 3-h. The dry ice condenser and the ammonia addition port were removed and replaced with a nitrogen pad adapter, a short path distillation apparatus, and a heating mantle. About 6-mL of TEA was added and the RB flask was heated with stirring and a gentle nitrogen sparge to effect conversion of ammonium cations to triethylammonium cations and remove ammonia and excess TEA. The cloudy dispersion turned transparent and slightly yellow starting at around 70°C. Heating was stopped when no more TEA was observed to be collecting in the receiver flask. Once cooled to ambient temperature, weight percent solids were measured by vacuum oven drying (about 60-90°C, 29.5"-Hg) until constant weight was achieved and found to be 28.3%. The disappearance of remaining SO₂F groups and presence of SO₂NH₂ groups were confirmed by ¹⁹F NMR, and FTIR spectroscopy of a thin film cast from the dispersion. NH absorption centered at about 3200-cm⁻¹ and the disappearance of the remaining SO₂F absorption at about 1470-cm⁻¹ were confirmed.

### EXAMPLES 11-14

### MEMBRANE FABRICATION, CROSS-LINKING, AND HYDROLYSIS ACID EXCHANGE

### EXAMPLE 11

A mixture consisting of 3 parts by weight of the dispersion in Example 2 and 2 parts by weight of the polymeric cross-linking agent of Example 9 was prepared. A membrane from this mixture was cast on 2-mil thick Mylar^{®} (tacked to glass) using a draw down knife with a 0.025" gap. The membrane on Mylar^{®}/glass was gently heated (about 50°C) on a level hot plate to evaporate DMF. The membrane was subsequently removed from the glass and subjected to a further drying/annealing step at 150°C for 5 minutes in a forced air oven. The membrane thickness after annealing was 74 ± 2-µm. Two 46-mm diameter circular pieces were cut from the film. With the Mylar^{®} backing still in place, one of the pieces was subjected to a crosslinking step in which it was immersed in 15-mL of an anhydrous organic base, *N,N,N',N*'-tetramethylethylenediamine (TMEDA), under gentle reflux for 3 hours. Both pieces were subsequently subjected to a hydrolysis step where each piece was independently placed in a 125-mL Erlenmeyer flask containing 40-mL of a 23-% (w/w) potassium hydroxide solution in water/ethanol (4:1). Upon heating, the piece that had not been subjected to the crosslinking step readily dispersed in the hydrolysis mixture leaving the Mylar^{®} backing film. The piece that had been subjected to crosslinking separated from the Mylar^{®} backing film, was somewhat swollen, but otherwise remained intact with refluxing of the hydrolysis solution. The crosslinked film was further subjected to two acid exchanges in concentrated nitric acid, and finally rinsed with deionized water until the rinse pH was ≥6 as measured using universal pH paper. The diameter of the water soaked film was 50 ± 1-mm while the thickness was 88 ± 2-µm. The EW was measured by titration and vacuum oven drying and was 725-g mol⁻¹.

### EXAMPLE 12

55.35-g of the partially hydrolyzed poly(PSEPVE-*co*-TFE) dispersion of Example 4 was added to a clean and dry 250-mL RB flask fitted with a septum. With magnetic stirring and ice bath cooling, 4.57-g of a 1.99% ethylenediamine (EDA) solution (1.52-mmol) in DMF was slowly added using a 5-cc glass syringe. The ice bath was removed after EDA addition and the dispersion was stirred for 1-h while warming to ambient conditions. The dispersion was filtered using ~10-µm polypropylene filter cloth and a membrane was cast onto 2-mil thick Mylar^{®} (tacked to glass) using a casting knife with a 0.020" gap. The wet film on Mylar^{®}/glass was gently heated (about 50°C) on a level hot plate to evaporate DMF. The dry membrane on Mylar^{®} was subsequently removed from the glass and subjected to a further drying/annealing step at 150°C for 5 minutes in a forced air oven. Dry membrane thickness was about 50-µm. Two 46-mm diameter circular pieces were cut from the membrane. With the Mylar^{®} backing still in place, one of the pieces was subjected to a crosslinking step in which it was immersed in 15-mL of TMEDA and gently refluxed for 3 hours. Both pieces were subsequently subjected to a hydrolysis step where each piece was independently placed in a 125-mL Erlenmeyer flask containing 40-mL of a 23-% (w/w) potassium hydroxide solution in water/ethanol (4:1). Upon heating, the piece that had not been subjected to the crosslinking step partially dissolved suggesting that some cross-linking had occurred during annealing. The piece that had been subjected to crosslinking separated from the Mylar^{®} backing, was somewhat swollen, but otherwise remained intact with refluxing of the hydrolysis solution. The crosslinked membrane was further subjected to two acid exchanges in concentrated nitric acid, and finally rinsed with deionized water until the rinse pH was ≥6 as measured using universal pH paper.

### EXAMPLE 13

5.51-g (1.64-mmol SO₂F) of the partially hydrolyzed poly(PSEPVE-co-TFE) dispersion of Example 4 and 0.265-g (0.736-mmol) NH₂O₂(CF₂)₄SO₂NH₂ were added to a dry 20-cc glass vial. The NH₂SO₂(CF₂)₄SO₂NH₂ readily dissolved in the dispersion with magnetic stirring. A membrane was cast by pouring the dispersion onto 2-mil thick Mylar^{®} (tacked to glass). The membrane on Mylar^{®}/glass was gently heated (about 50°C) on a level hot plate to evaporate DMF. The dry membrane on Mylar^{®} was subsequently removed from the glass and subjected to a further drying/annealing step at 150°C for 5 minutes in a forced air oven. The dry membrane was completely transparent and the thickness was about 100-µm. The annealed membrane was trimmed of excess Mylar^{®} and with the backing in place, was subjected to a cross-linking reaction by exposure to refluxing TMEDA over LiH for several hours. The membrane was then hydrolyzed using 23-% (w/w) potassium hydroxide solution in water/ethanol (4:1) at ambient temperature overnight. After hydrolysis, the Mylar^{®} backing was easily removed. The membrane was acid exchanged in refluxing 35-% nitric acid for 2-h. The membrane was then rinsed with deionized water, acid exchanged again with 2-M HCl, and finally rinsed with deionized water. A small membrane piece was titrated and the equivalent weight was 770-g/mol.

### EXAMPLE 14

50.0-g (9.70-mmol SO₂F) of the partially hydrolyzed poly(PSEVE-co-TFE) dispersion of Example 8 and 1.16-g (3.22-mmol) NH₂SO₂(CF₂)₄SO₂NH₂ were added to a dry 250-mL RB flask. The NH2SO₂(CF₂)₄SO₂NH₂ readily dissolved in the dispersion with magnetic stirring. The homogenous mixture was then filtered through ~10-µm polypropylene filter cloth. An 8" x 10" casting surface was assembled with a 2-mil Mylar^{®} film that was water tacked to a glass substrate. The glass substrate was placed on an aluminum plate that was gently heated (~50°C) using a small hot plate. The Mylar^{®}, glass substrate, aluminum table, and hot plate assembly were placed on an adjustable support table and leveled. Meanwhile, a 10" diameter circular piece of 0.001" thick microporous polytetrafluoroethylene (ePTFE) was supported in an embroidery hoop, and sprayed with a 0.5-% (w/v) triethylammonium salt solution of Zonyl^{®} 1033D in ethanol. The ethanol was evaporated with a dry nitrogen stream.

A 7" wide casting knife with an adjustable blade was set up with a 0.008" gap. The casting knife was lined up on the table approximately 0.75" from the back end, facing forward. Approximately 6-mL of the dispersion mixture was carefully placed (avoiding entrained bubbles) on the table within the space defined by the casting knife blade and side supports. The knife was then drawn forward towards the front of the table. The prepared ePTFE substrate was centered on the table and the dispersion soaked in the substrate. The embroidery hoop was removed and a cover with a dry nitrogen sparge inlet and outlet was placed over the entire table assembly. After 1-h, the membrane was sufficiently dry and a second dispersion layer was applied in essentially the same manner as the fist layer. The cover was replaced over the entire assembly, and the dry nitrogen sparge was restarted. The membrane was effectively dry after -1-h. The membrane, still attached to Mylar^{®}, was removed from the casting table and annealed at 150°C for 2 minutes in a forced air oven. The membrane was then pealed from the Mylar^{®} backing and supported in a 6.5" diameter stainless steel embroidery hoop.

The supported membrane was placed horizontally in a shallow 8" dia. kettle, fitted with reflux condenser and dry nitrogen pad. The membrane was crosslinked by exposure to the vapor of refluxing TMEDA over LiH. The membrane surfaces were approximately 1" from the refluxing TMEDA. The crosslinking step was stopped after 1-h. The supported membrane was then hydrolyzed in 15-% aqueous KOH at 70 to 90°C for 30 minutes and then rinsed of excess KOH using deionized water. The supported films were acid exchanged with 2-M HNO₃ for 30 minutes then rinsed of excess acid with DI water. A second acid exchange was done with 35-% HNO₃ at reflux for 30 minutes. Finally, the membrane was rinsed with DI water, acid exchanged with 2-M HNO₃, rinsed with DI water, then air dried overnight before being removed from the embroidery hoop. The dry membrane thickness was 35-µm.

## Claims

1. A dispersion comprising one or more polar liquids and a polymer with a fluorinated backbone comprising 25% to 75% pendant groups described by the formula -(O-CF₂CFR_{f})ₐ-(O-CF₂)_{b}-(CFR'_{f})_{c}SO₂Q, and 75% to 25% pendant groups described by the formula -(O-CF₂CFR_{f})ₐ-(O-CF₂)_{b}-(CFR'_{f})_{c}SO₃M, where Q is a halogen or NR¹R², or mixture thereof, R¹ and R² are independently hydrogen or optionally substituted alkyl groups, R_{f} and R'_{f} are independently selected from F, Cl or a perfluorinated alkyl group having 1 to 10 carbon atoms, a=0 to 2, b=0 to 1, c=0 to 6, and M is hydrogen or one or more univalent cations, wherein "polar liquid" means any compound that is liquid at process conditions and refers to a single liquid or to a mixture of two or more polar liquids, wherein the liquid(s) have a dipole moment of about 1.5 debye units or higher.

2. The dispersion of Claim 1 wherein the polar liquid is selected from DMF, DMAC, NMP, DMSO, acetonitrile, propylene carbonate, methanol, ethanol, water, or a combination thereof.

3. The dispersion of Claim 1 wherein the polymer comprises a fluorinated or perfluorinated backbone and pendant groups of the formula -O-CF₂CF(CF₃)-O-CF₂CF₂SO₂F or -OCF₂CF₂SO₂F, or any combination thereof.

4. The dispersion of Claim 3 wherein the polymer is perfluorinated.

## Patentansprüche

1. Dispersion umfassend eine oder mehrere polare Flüssigkeiten und ein Polymer mit einer fluorierten Rückgratkette umfassend 25 % bis 75 % Seitengruppen, die durch die Formel -(O-CF₂CFR_{f})ₐ-(O-CF₂)_{b}-(CFR'_{f})_{c}SO₂Q beschrieben werden, und 75 % bis 25 % Seitengruppen, die durch die Formel -(O-CF₂CFR_{f})ₐ-(O-CF₂)_{b}-(CFR'_{f})_{c}SO₃M beschrieben werden, wobei Q ein Halogen oder NR¹R² oder eine Mischung davon ist, R¹ und R² unabhängig Wasserstoff oder wahlweise substituierte Alkylgruppen sind, R_{f} und R'_{f} unabhängig unter F, Cl oder einer perfluorierten Alkylgruppe ausgewählt werden, die 1 bis 10 Kohlenstoffatome aufweist, a = 0 bis 2 beträgt, b = 0 bis 1 beträgt, c = 0 bis 6 beträgt und M Wasserstoff oder ein oder mehrere einwertige Kationen ist, wobei "polare Flüssigkeit" irgendeine Verbindung bedeutet, die unter Verfahrensbedingungen flüssig ist, und sich auf eine einzige Flüssigkeit oder auf eine Mischung von zwei oder mehreren polaren Flüssigkeiten bezieht, wobei die Flüssigkeit(en) ein Dipolmoment von etwa 1,5 Einheiten Debye oder mehr aufweist/aufweisen.

2. Dispersion nach Anspruch 1, wobei die polare Flüssigkeit unter DMF, DMAC, NMP, DMSO, Acetonitril, Propylencarbonat, Methanol, Ethanol, Wasser oder einer Kombination davon ausgewählt wird.

3. Dispersion nach Anspruch 1, wobei das Polymer eine fluorierte oder perfluorierte Rückgratkette und Seitengruppen der Formel -O-CF₂CF(CF₃)-O-CF₂CF₂SO₂F oder - OCF₂CF₂SO₂F oder irgendeine Kombination davon umfasst.

4. Dispersion nach Anspruch 3, wobei das Polymer perfluoriert ist.

## Revendications

1. Dispersion comprenant un ou plusieurs liquide(s) polaire(s) et un polymère avec un squelette fluoré comprenant 25 % à 75 % de groupes pendants décrits par la formule - (O-CF₂CFR_{f})ₐ-(O-CF₂)_{b}-(CFR'_{f})_{c}SO₂Q, et 75 % à 25 % de groupes pendants décrits par la formule -(O-CF₂CFR_{f})ₐ-(O-CF₂)_{b}-(CFR'_{f})_{c}SO₃M, où Q est un groupe halogéno ou NR¹R², ou un mélange de ceux-ci, R¹ et R² sont indépendamment un atome d'hydrogène ou des groupes alkyle optionnellement substitués, R_{f} et R'_{f} sont indépendamment choisis parmi F, Cl ou un groupe alkyle perfluoré ayant 1 à 10 atome(s) de carbone, a = 0 à 2, b = 0 à 1, c = 0 à 6, et M est un atome d'hydrogène ou un ou plusieurs cation(s) monovalent(s), dans laquelle « liquide polaire » signifie n'importe quel composé qui est liquide aux conditions du procédé et désigne un liquide unique ou un mélange de deux ou plusieurs liquides polaires, dans laquelle le(s) liquide(s) a(ont) un moment dipolaire d'environ 1,5 unités Debye ou plus.

2. Dispersion selon la revendication 1, dans laquelle le liquide polaire est choisi parmi le DMF, le DMAC, la NMP, le DMSO, l'acétonitrile, le carbonate de propylène, le méthanol, l'éthanol, l'eau, ou une combinaison de ceux-ci.

3. Dispersion selon la revendication 1, dans laquelle le polymère comprend un squelette fluoré ou perfluoré et des groupes pendants de formule -O-CF₂CF(CF₃)-O-CF₂CF₂SO₂F ou -OCF₂CF₂SO₂F, ou n'importe quelle combinaison de ceux-ci.

4. Dispersion selon la revendication 3, dans laquelle le polymère est perfluoré.
